# EUROPÄISCHE PATENTSCHRIFT

(11) **EP 2 547 541 B1**
(45) Veröffentlichungstag und Bekanntmachung des Hinweises auf die Patenterteilung: **21.01.2015**
(21) Anmeldenummer: 11710463.8
(22) Anmeldetag: 18.03.2011
(51) Int. Cl.: B60K 1/04, H01R 13/00, H01R 13/631, B60S 5/06

(54) **KUPPLUNG ZWISCHEN EINER WECHSELBAREN BATTERIE UND EINEM FAHRZEUG**
COUPLING BETWEEN A REPLACEABLE BATTERY AND A VEHICLE
COUPLAGE ENTRE UNE BATTERIE REMPLAÇABLE ET UN VÉHICULE

(30) Priorität: 19.03.2010 DE 102010012096
(43) Veröffentlichungstag der Anmeldung: 23.01.2013
(73) Patentinhaber: Magna Steyr Fahrzeugtechnik AG & Co. KG, 8041 Graz (AT)
(72) Erfinder: KRACHLER, Gerhard, A-8211 Grosspesendorf (AT); RODLER, Martin, A-8160 Krottendorf (AT)
(74) Vertreter: Rausch, Gabriele
(86) Internationale Anmeldenummer: PCT/EP2011/054152
(87) Internationale Veröffentlichungsnummer: WO 2011/113940

(56) Entgegenhaltungen:
- EP-A1- 1 578 185
- EP-A2- 2 006 145
- WO-A1-94/13508
- WO-A1-2004/027937
- WO-A1-2009/125838

## Beschreibung

Die Erfindung betrifft eine Kupplung zwischen einer wechselbaren Batterie und einem Fahrzeug, zur Herstellung einer elektrischen Kontaktierung zwischen der Batterie und einem Fahrzeugbordnetz, wobei die Kupplung zumindest einen fahrzeugseitigen und zumindest einen batterieseitigen Kupplungsteil mit je zumindest einer elektrischen Kontaktstelle aufweist.

Weiters betrifft die Erfindung ein Fahrzeug mit einem elektrischen Antrieb.

Aus der US 5612606 A sind ein Verfahren sowie eine Vorrichtung zum Wechseln einer Batterie eines Fahrzeuges mit einem elektrischen Antrieb bekannt geworden. Das Fahrzeug weist hierbei eine Schnittstelle zu einer Batterie auf. Gemäß der technischen Lehre des bekannten Dokuments erfolgt vor dem Einbau der Batterie in das Fahrzeug ein elektrischer Anschluss der Batterie an das Fahrzeugbordnetz. Dies hat den Nachteil zur Folge, dass der Einbau der Batterie wesentlich erschwert wird, wobei auch die Gefahr einer Beschädigung der elektrischen Kontaktierung gegeben ist.

Aus der EP 2 006 145 A2 ist ein Verriegelungsmechanismus zum Sichern eines in einem Elektrofahrzeug, insbesondere einem elektrischen Flurförderfahrzeug, aufgenommenen Batterieblocks bekannt, umfassend ein fahrzeugseitiges Steckerelement und ein mit diesem zusammensteckbares, mit dem Batterieblock verbundenes Batteriesteckerelement. Dabei ist die Steckverbindung zwischen fahrzeugseitigem Steckerelement und Batteriesteckerelement in Abhängigkeit von der Stellung des Verriegelungselements herstellbar und lösbar.

Es ist daher eine Aufgabe der Erfindung, den Einbau bzw. Wechsel einer Batterie eines Fahrzeuges mit einem elektrischen Antrieb zu vereinfachen.

Diese Aufgabe wird mit einer Kupplung der eingangs genannten Art erfindungsgemäß dadurch gelöst, dass die bis zur mechanischen Befestigung der Batterie an dem Fahrzeug von einander getrennten Kontaktstellen der Kupplungsteile nach erfolgter mechanischer Befestigung der Batterie miteinander in Kontakt bringbar sind, wobei über die Kupplungsteile auch
Datenübertragungsanschlüsse zum Betrieb der Batterie miteinander verbindbar sind und sämtliche andere vorhandene Anschlüsse zum Betrieb der Batterie, wie Kühlflüssigkeitsanschlüsse etc. auch über die Kupplung miteinander verbindbar sind.

Bei der erfindungsgemäßen Lösung erfolgt der Kuppelvorgang der Kupplung und somit eine elektrische Kontaktierung der Batterie erst nach der Batteriemontage. Dadurch ergeben sich folgende Vorteile:
Während und unmittelbar nach der Batteriemontage besteht keine elektrische Verbindung zwischen der Batterie und dem Fahrzeugbordnetz. Auch werden eine geometrische Überbestimmung bzw. Beschädigungen an der Kupplung aufgrund von Toleranzproblemen während der Montage ausgeschlossen. Auch die Kuppelrichtung und somit die Position der Kupplung können frei gewählt werden, da sie nicht mehr durch die Montagerichtung der Batterie beeinflusst werden.

Die Kupplung ist eine Multikupplung, d.h. sämtliche Anschlüsse zum Betrieb der Batterie, wie Kühlflüssigkeitsanschlüsse, Datenübertragungsanschlüsse etc. werden über die Kupplung miteinander verbunden.

Gemäß einer vorteilhaften Variante der Erfindung können die einander zugeordneten elektrischen Kontaktstellen der Kupplungsteile je eine Steckverbindung bilden. Diese Ausführungsform der Erfindung zeichnet sich vor allem durch eine hohe Zuverlässigkeit beim Schließen der Kontakte aus.

Ein ungewolltes und zufälliges gegenseitiges Berühren der elektrischen Kontakte lässt sich zuverlässig dadurch verhindern, dass der fahrzeugseitige Kupplungsteil mit einer entgegen der Richtung der Kuppelrichtung wirkenden Rückstellkraft belastet ist. Aufgrund der Rückstellkraft kann sicher gestellt werden, dass die Kupplungsteile voneinander beabstandet sind. Zum Zusammenführen der Kupplungsteile muss dann die Rückstellkraft überwunden werden.

Eine Weiterbildung der Erfindung, die sich durch eine besonders Robustheit und einfache Realisierbarkeit auszeichnet, sieht vor, dass der fahrzeugseitige Kupplungsteil zumindest eine die Rückstellkraft bewirkende Rückstellfeder aufweist.

Hierbei hat es sich als besonders vorteilhaft herausgestellt, um eine definierte Richtung und Größe der Rückstellkraft zu erzielen, dass die Rückstellfeder als Schraubenfeder ausgebildet ist, die an einem Federzapfen geführt ist.

Besonders günstig hinsichtlich der Montage und Betriebssicherheit ist es, wenn die Kupplungsteile miteinander verschraubbar sind und die elektrische Kontaktierung durch ein Verschrauben der Kupplungsteile hergestellt ist. Durch die Verschraubung der Kupplungsteile können Schwingungen und die daraus resultierenden Mikro- Bewegungen und somit der Verschleiß an den elektrischen Steckverbindungen reduziert werden.

Weiters kann an zumindest einer der Kupplungsteile zumindest ein Schalter angeordnet sein, der bei Verbinden der elektrischen Kontaktstellen betätigbar ist. Die Anordnung eines Schalters ermöglicht die Realisierung unterschiedlicher Überwachungsmöglichkeiten der Kupplung. So kann der zumindest eine Schalter mit einer Ausgabeeinheit verbunden sein, auf welcher der Status der elektrischen Verbindung angegeben wird. Neben der Überwachung der Herstellung einer korrekten elektrischen Verbindung wäre es auch möglich ein ungewolltes Lösen der Kupplungsteile voneinander mittels des Schalters zu detektieren. So könnte ein beispielsweise federbelasteter Schalter bei einem Auseinanderbewegen der Kupplungsteile auslösen und einen Überwachungsschaltkreis unterbrechen oder schließen, woraufhin eine entsprechende Warnung für den Fahrer generiert werden könnte.

Die oben genannte Aufgabe lässt sich auch mit einem Fahrzeug der eingangs genannten Art erfindungsgemäß dadurch lösen, dass es eine Kupplung nach einem der Ansprüche 1 bis 9 aufweist und die Kupplung im Bereich unterhalb eines Beifahrerfußraumes angeordnet ist, wobei über der Kupplung eine mit einer Abdeckung versehene Serviceöffnung angeordnet ist, über welche die Kupplung zugänglich ist.

Die Montage der Batterie an dem Fahrzeug lässt sich dadurch wesentlich vereinfachen, dass an der Batterie zumindest zwei, bevorzugterweise zumindest drei, Positionierungshilfen in Kegelform angeordnet sind, wobei an dem Fahrzeug Aufnahmen für diese Positionierungshilfen vorgesehen sind. Durch diese Variante der Erfindung kann auf einfache Weise eine korrekte Positionierung der Batterie an dem Fahrzeug erreicht werden.

Gemäß einer weiteren bevorzugten Variante der Erfindung, welche sich durch eine gute Handhabung und eine einfache Montage auszeichnet, kann die Batterie an dem Fahrzeug verschraubt sein.

Die Erfindung samt weiteren Vorteilen wird im Folgenden anhand einiger nicht einschränkender Ausführungsbeispiele näher erläutert, welche in den Zeichnungen dargestellt sind. In diesen zeigen schematisch:
Fig. 1 einen Fahrzeugrahmen mit einer Serviceöffnung, unter welcher die Kupplung angeordnet ist;
Fig. 2 eine perspektivische Ansicht der Kupplung aus Fig. 1 und
Fig. 3 eine weitere perspektivische Ansicht der Kupplung aus Fig. 1.

Die Figuren sind übergreifend beschrieben, wobei gleiche Bezugszeichen in den Figuren die selben Bauteile bezeichnen.

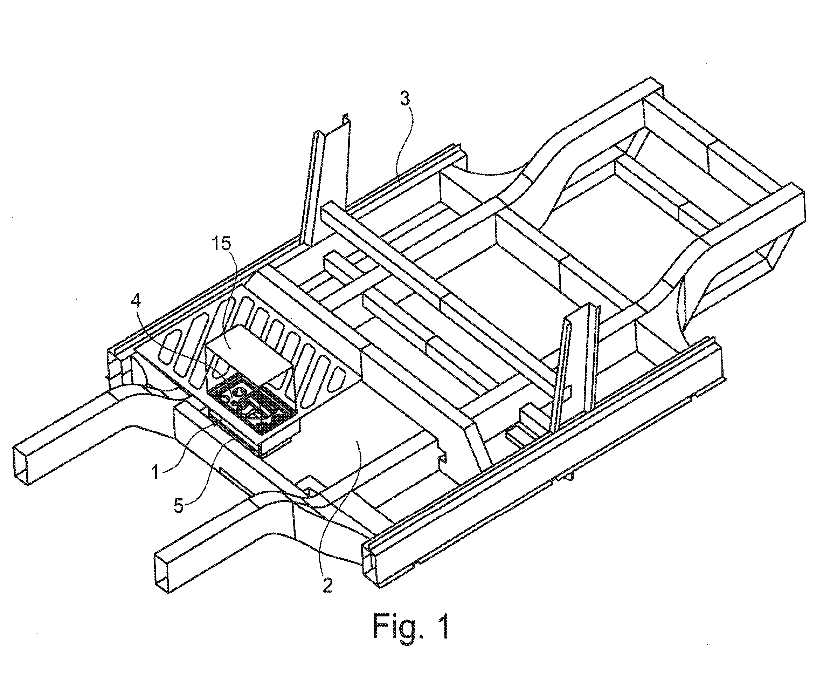

Gemäß Fig. 1 ist eine Kupplung 1 zwischen einer wechselbaren Batterie 2 und einem Fahrzeug 3, zur Herstellung einer elektrischen Kontaktierung zwischen der Batterie 2 und einem Fahrzeugbordnetz vorgesehen. Die Batterie 2 kann an dem Fahrzeug 3 mittels Schrauben befestigt sein. Um die Montage der Batterie zu vereinfachen kann die Batterie 2 zwei, drei oder mehr Positionierungshilfen in Kegelform aufweisen, wobei an dem Fahrzeug 3 Aufnahmen für diese Positionierungshilfen vorgesehen sind.

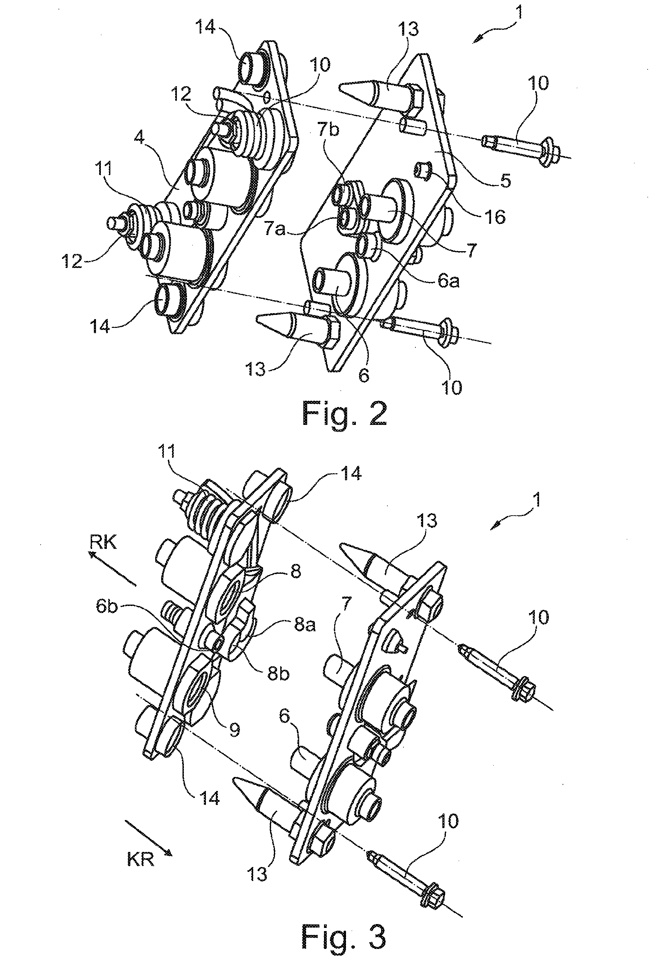

Wie aus Fig. 2 und 3 deutlich erkennbar ist, weist die Kupplung 1 einen fahrzeugseitigen Kupplungsteil 4 und einen batterieseitigen Kupplungsteil 5 mit je zumindest einer elektrischen Kontaktstelle 6, 7, 8, 9 auf. Bis zur mechanischen Befestigung der Batterie 2 an dem Fahrzeug 3 sind die

Kontaktstellen 6, 7, 8, 9 der Kupplungsteile 4, 5 von einander getrennt. Erst nach erfolgter mechanischer Befestigung der Batterie 2 an dem Fahrzeug 3 werden die Kontaktstellen 6, 7, 8, 9 miteinander in Kontakt gebracht. Somit besteht während und auch unmittelbar nach der Batteriemontage keine elektrische Verbindung zwischen der Batterie 2 und dem Fahrzeug 3. Die Verbindung von Leistungs-, Daten-Übertragung und Kühlmittelkreislauf wird erst durch Verbinden der Kupplungsteile 4 und 5 hergestellt, wobei die Anschlussstellen 6, 7, 8, 9 des Kühlmittelkreislaufes, die Datenübertragungsanschlüsse 6a, 6b und die elektrischen Kontaktstellen 7a, 7b, 8a, 8b miteinander verbunden werden. Die einander zugeordneten elektrischen Kontaktstellen 7a, 7b, 8a, 8b der Kupplungsteile 4, 5 können je eine Steckverbindung bilden.

Bei der in Fig. 2 dargestellten Variante der Erfindung ist die Sicherung der Kupplung 1 durch Schrauben 10 realisiert ist. Hierbei wird die Verbindung von Leistungs- und Datenübertragung sowie dem Kühlmittelkreislauf erst durch Verschrauben der Kupplungsteile 4 und 5 hergestellt.

Weites ist es von Vorteil, wenn der fahrzeugseitige Kupplungsteil 4 in einer entkoppelten Lage von dem batterieseitigen Kupplungsteil 5 beabstandet ist. Diese Beabstandung kann durch eine Beaufschlagung des fahrzeugseitigen Kupplungsteils 4 mittels einer entgegen der Kuppelrichtung KR wirkenden Rückstellkraft RK erreicht werden. Zur Erzeugung der Rückstellkraft kann der Kupplungsteil 4 eine Rückstellfeder 11, beispielsweise eine um einen Federzapfen 12 angeordnete Schraubenfeder, aufweisen.

Durch die Schraubbewegung der Schrauben 10 der Kupplung 1, wird der fahrzeugseitige Kupplungsteil 4 an den batterieseitigen Kupplungsteil 5 entgegen der Rückstellkraft RK herangezogen und die Kupplung 1 geschlossen. Um ein Zusammenführen der Kupplungsteile 4 und 5 zu erleichtern kann an einem der Kuppelelemente 4, 5 ein oder mehrere Führungszapfen 13 vorgesehen sein. Die Führungszapfen 13 greifen in Aufnahmen 14 des anderen Kupplungsteils 4, 5 ein.

Weiters kann an einer der Kupplungsteile 4, 5 ein Schalter 16 angeordnet sein, der bei Verbinden der elektrischen Kontaktstellen 7a, 7b, 8a, 8b betätigbar ist. Der Schalter kann mit einer Ausgabeeinheit verbunden ist, auf welcher der Status der elektrischen Verbindung angegeben wird.

Wie aus Fig. 1 weiters erkennbar ist, kann die Kupplung 1 im Bereich unterhalb eines Beifahrerfußraumes angeordnet ist, wobei über der Kupplung 1 eine mit einer Abdeckung 15 versehene Serviceöffnung angeordnet sein, über welche die Kupplung 1 zugänglich ist.

### Bezugszeichenliste

- Datenübertragungsanschluss: 6a, 6b
- Anschlussstelle für Kühlkreislauf: 7

- elektrische Kontaktstelle: 7a, 7b
- Anschlussstelle für Kühlkreislauf: 8
- elektrische Kontaktstelle: 8a, 8b
- Anschlussstelle für Kühlkreislauf: 9
- Schraube: 10
- Rückstellfeder: 11
- Federzapfen: 12
- Führungszapfen: 13
- Aufnahme: 14
- Abdeckung: 15
- Schalter: 16

## Patentansprüche

1. Kupplung (1) zwischen einer wechselbaren Batterie (2) und einem Fahrzeug (3), zur Herstellung einer elektrischen Kontaktierung zwischen der Batterie (2) und einem Fahrzeugbordnetz, wobei die Kupplung (1) zumindest einen fahrzeugseitigen (4) und zumindest einen batterieseitigen Kupplungsteil (5) mit je zumindest einer elektrischen Kontaktstelle (7a, 7b, 8a, 8b) aufweist, wobei die bis zur mechanischen Befestigung der Batterie (2) an dem Fahrzeug (3) von einander getrennten Kontaktstellen (7a, 7b, 8a, 8b) der Kupplungsteile (4, 5) nach erfolgter mechanischer Befestigung der Batterie (2) miteinander in Kontakt bringbar sind, **dadurch gekennzeichnet, dass** über die Kupplungsteile (4, 5) auch Datenübertragungsanschlüsse zum Betrieb der Batterie (2) miteinander verbindbar sind und dass sämtliche andere vorhandene Anschlüsse zum Betrieb der Batterie (2), wie Kühlflüssigkeitsanschlüsse etc. auch über die Kupplung (1) miteinander verbunden werden.

2. Kupplung nach Anspruch 1, **dadurch gekennzeichnet, dass** die einander zugeordneten elektrischen Kontaktstellen (7a, 7b, 8a, 8b) der Kupplungsteile (4, 5) je eine Steckverbindung bilden sind.

3. Kupplung nach Anspruch 1 oder 2, **dadurch gekennzeichnet, dass** der fahrzeugseitige Kupplungsteil (4) mit einer entgegen der Richtung der Kuppelrichtung wirkenden Rückstellkraft belastet ist.

4. Kupplung nach Anspruch 3, **dadurch gekennzeichnet, dass** der fahrzeugseitige Kupplungsteil (4) zumindest eine die Rückstellkraft bewirkende Rückstellfeder (11) aufweist.

5. Kupplung nach Anspruch 4, **dadurch gekennzeichnet, dass** die Rückstellfeder (11) als Schraubenfeder ausgebildet ist, die an einem Federzapfen (12) geführt ist.

6. Kupplung nach einem der Ansprüche 1 bis 5, **dadurch gekennzeichnet, dass** die Kupplungsteile (4, 5) miteinander verschraubbar sind und die elektrische Kontaktierung durch ein Verschrauben der Kupplungsteile (4, 5) hergestellt ist.

7. Kupplung nach einem der Ansprüche 1 bis 6, **dadurch gekennzeichnet, dass** an zumindest einer der Kupplungsteile (4, 5) zumindest ein Schalter (16) angeordnet ist, der bei Verbinden der elektrischen Kontaktstellen (7a, 7b, 8a, 8b) betätigbar ist.

8. Kupplung nach Anspruch 7, **dadurch gekennzeichnet, dass** der zumindest eine Schalter (16) mit einer Ausgabeeinheit verbunden ist, auf welcher der Status der elektrischen Verbindung angegeben wird.

9. Kupplung nach einem der Ansprüche 1 bis 8, **dadurch gekennzeichnet, dass** an zumindest einem der Kuppelelemente (4, 5) zumindest ein mit einer entsprechenden Aufnahme (14) des anderen Kuppelelementes (4, 5) zusammenwirkender Führungszapfen (13) vorgesehen ist.

10. Fahrzeug (3) mit einem elektrischen Antrieb, **dadurch gekennzeichnet, dass** es eine Kupplung (1) nach einem der Ansprüche 1 bis 9 aufweist und die Kupplung (1) im Bereich unterhalb eines Beifahrerfußraumes angeordnet ist, wobei über der Kupplung (1) eine mit einer Abdeckung (15) versehene Serviceöffnung angeordnet ist, über welche die Kupplung (1) zugänglich ist.

11. Fahrzeug nach Anspruch 10, **dadurch gekennzeichnet, dass** an der Batterie (2) zumindest zwei, bevorzugterweise zumindest drei, Positionierungshilfen in Kegelform angeordnet sind, wobei an dem Fahrzeug Aufnahmen für diese Positionierungshilfen vorgesehen sind.

12. Fahrzeug nach Anspruch 10 oder 11, **dadurch gekennzeichnet, dass** die Batterie (2) an dem Fahrzeug verschraubt ist.

## Claims

1. Coupling (1) between a replaceable battery (2) and a vehicle (3) in order to produce an electrical contact between the battery (2) and a vehicle electrical system, wherein the coupling (1) comprises at least one vehicle-side coupling part (4) and at least one battery-side coupling part (5), each coupling part having at least one electrical contact site (7a, 7b, 8a, 8b), wherein the contact sites (7a, 7b, 8a, 8b) of the coupling parts (4, 5) that are separate from each other until the battery (2) is mechanically fastened to the vehicle (3) can be brought into mutual contact after the battery (2) has been mechanically fastened to the vehicle, **characterized in that** data transfer connections for operating the battery (2) can also be mutually connected by way of the coupling parts (4, 5) and **in that** all the other connections provided for operating the battery (2) such as cooling fluid connections etc., are also mutually connected by way of the coupling (1).

2. Coupling according to Claim 1, **characterized in that** the mutually associated electrical contact sites (7a, 7b, 8a, 8b) of the coupling parts (4, 5) each form a plug-in connection.

3. Coupling according to Claim 1 or 2, **characterized in that** the vehicle-side coupling part (4) is subjected to a restoring force that acts in the opposite direction to the coupling direction.

4. Coupling according to Claim 3, **characterized in that** the vehicle-side coupling part (4) comprises at least one return spring (11) that generates the restoring force.

5. Coupling according to Claim 4, **characterized in that** the return spring (11) is embodied as a helical spring that is guided on a spring spigot (12).

6. Coupling according to any one of Claims 1 to 5, **characterized in that** the coupling parts (4, 5) can be screwed one to the other and the electrical contact is produced by screwing into place the coupling parts (4, 5).

7. Coupling according to any one of Claims 1 to 6, **characterized in that** at least one switch (16) is arranged on at least one of the coupling parts (4, 5), which switch can be actuated when connecting the electrical contact sites (7a, 7b, 8a, 8b).

8. Coupling according to Claim 7, **characterized in that** the at least one switch (16) is connected to an output unit, at which the status of the electrical connection is indicated.

9. Coupling according to any one of Claims 1 to 8, **characterized in that** at least one guide spigot (13) that cooperates with a corresponding receiving device (14) of the other coupling element (4, 5) is provided on at least one of the coupling elements.

10. Vehicle (3) having an electrical drive, **characterized in that** it comprises a coupling (1) according to any one of Claims 1 to 9 and the coupling (1) is arranged in the region below a passenger footwell, wherein a service orifice that is provided with a cover (15) is arranged above the coupling (1) and the coupling (1) can be accessed by way of said service orifice.

11. Vehicle according to Claim 10, **characterized in that** at least two, preferably at least three, conical positioning aids are arranged on the battery (2), wherein receiving devices for these positioning aids are provided on the vehicle.

12. Vehicle according to Claim 10 or 11, **characterized in that** the battery (2) is screwed to the vehicle.

## Revendications

1. Couplage (1) entre une batterie remplaçable (2) et un véhicule (3), destiné à établir un contact électrique entre la batterie (2) et un réseau de bord de véhicule, le couplage (1) présentant au moins une partie de couplage côté véhicule (4) et au moins une partie de couplage côté batterie (5) comprenant chacune au moins un point de contact électrique (7a, 7b, 8a, 8b), les points de contact (7a, 7b, 8a, 8b) des parties de couplage (4, 5), séparés les uns des autres jusqu'à la fixation mécanique de la batterie (2) sur le véhicule (3), pouvant être amenés en contact mutuel après avoir accompli la fixation mécanique de la batterie (2), **caractérisé en ce que** par le biais des parties de couplage (4, 5) peuvent également être reliées ensemble des bornes de transmission de données destinées au fonctionnement de la batterie (2) et **en ce que** tous les autres raccords présents servant au fonctionnement de la batterie (2), comme les raccords de liquide de refroidissement, etc., sont également reliés ensemble par le biais du couplage (1).

2. Couplage selon la revendication 1, **caractérisé en ce que** les points de contact électrique (7a, 7b, 8a, 8b) associés les uns aux autres des parties de couplage (4, 5) forment chacun une connexion enfichable.

3. Couplage selon la revendication 1 ou 2, **caractérisé en ce que** la partie de couplage côté véhicule (4) est chargée avec une force de rappel agissant en sens inverse de la direction du couplage.

4. Couplage selon la revendication 3, **caractérisé en ce que** la partie de couplage côté véhicule (4) présente au moins un ressort de rappel (11) produisant la force de rappel.

5. Couplage selon la revendication 4, **caractérisé en ce que** le ressort de rappel (11) est réalisé sous la forme d'un ressort à boudin qui est guidé sur un axe de ressort (12).

6. Couplage selon l'une des revendications 1 à 5, **caractérisé en ce que** les parties de couplage (4, 5) peuvent être vissées l'une à l'autre et le contact électrique est établi par un vissage des parties de couplage (4, 5).

7. Couplage selon l'une des revendications 1 à 6, **caractérisé en ce qu'**au moins un commutateur (16) est disposé sur au moins l'une des parties de couplage (4, 5), lequel peut être actionné lors de la liaison des points de contact électrique (7a, 7b, 8a, 8b).

8. Couplage selon la revendication 7, **caractérisé en ce que** l'au moins un commutateur (16) est relié avec une unité de sortie sur laquelle est indiqué l'état de la liaison électrique.

9. Couplage selon l'une des revendications 1 à 8, **caractérisé en ce que** sur au moins l'un des éléments de couplage (4, 5) est prévu au moins un axe de guidage (13) qui coopère avec un logement (14) correspondant de l'autre élément de couplage (4, 5).

10. Véhicule (3) équipé d'un groupe propulseur électrique, **caractérisé en ce qu'**il possède un couplage (1) selon l'une des revendications 1 à 9 et le couplage (1) est disposé dans la zone au-dessous d'un espace des pieds de passager, au-dessus du couplage (1) étant disposée une ouverture de service munie d'un couvercle (15) par le biais de laquelle le couplage (1) est accessible.

11. Véhicule selon la revendication 10, **caractérisé en ce qu'**au moins deux, de préférence au moins trois éléments d'aide au positionnement de forme conique sont disposés sur la batterie (2), des logements pour ces éléments d'aide au positionnement étant prévus sur le véhicule.

12. Véhicule selon la revendication 10 ou 11, **caractérisé en ce que** la batterie (2) est vissée au véhicule.
